# EUROPEAN PATENT APPLICATION

(11) **EP 2 826 640 A1**
(43) Date of publication of application: **21.01.2015**
(21) Application number: 13176462.3
(22) Date of filing: 15.07.2013
(51) Int. Cl.: B60B 1/04

(54) **An improved bicycle wheel that prevents the bending of spoke wires**

(71) Applicant: Joy Cycle Parts (Shanzhen) Co Ltd, ShenZhen Guangdong (CN)
(72) Inventor: Chen, Shih-Wei, Baoan ShenZhen (CN)
(74) Representative: Hellmich, Wolfgang

(57) **Abstract**

An improved bicycle wheel hub that prevents the bending of spoke wires, where an annular protruding ear is provided on both sides of the hub, the protruding ear has perforations that allow spoke wires to pass through. The first end of the spoke wire pass through the perforations of the protruding ears, and the second end connect to the wheel rim. The protruding ear is also provided with openings; the spoke wires comprise inner and outer spoke wires; the opening is located at the edge by the perforations for the outer spoke wires to pass through; the connection point between the outer spoke wire and the protruding ear is located in the opening.

## Description

### Field of the Invention

The present invention relates to bicycle wheel, and more particularly, a bicycle hub structure that prevents the bending of spoke wires.

### Description of Related Art

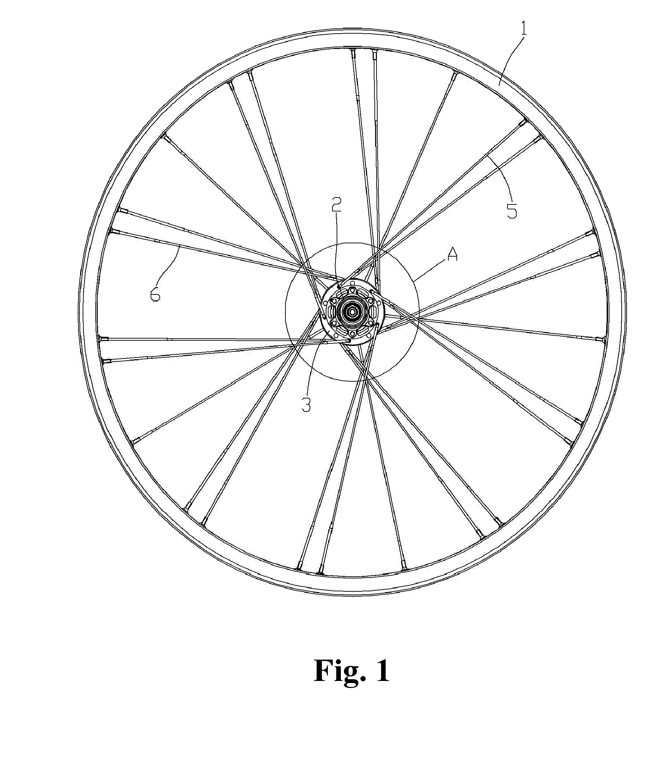

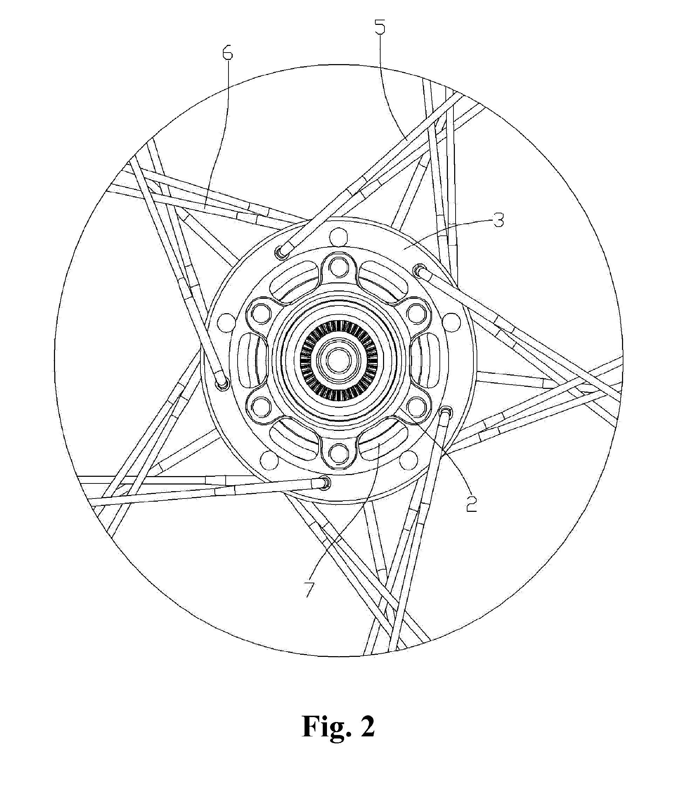

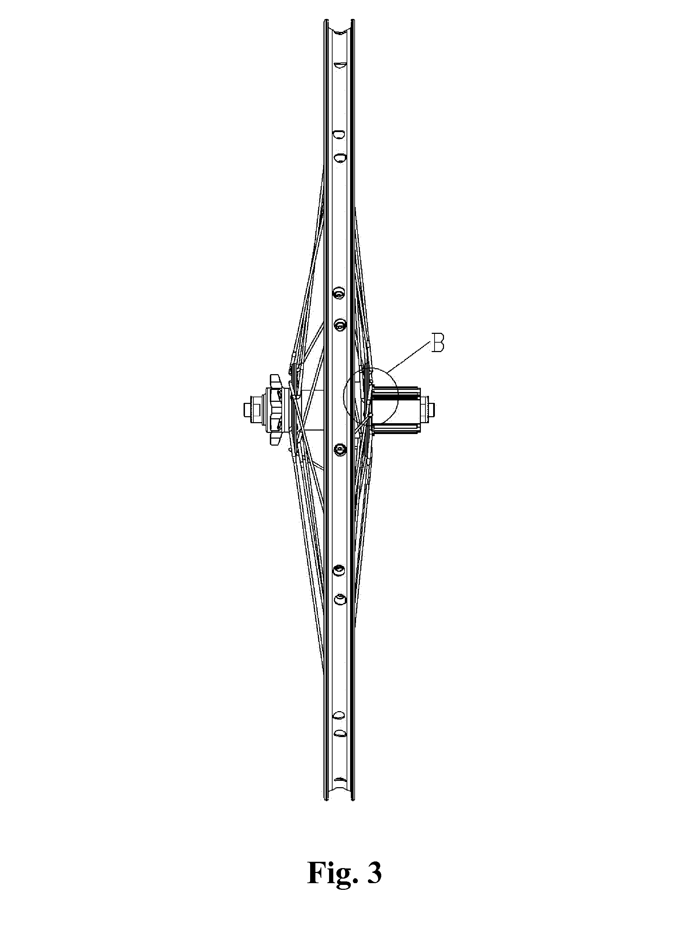

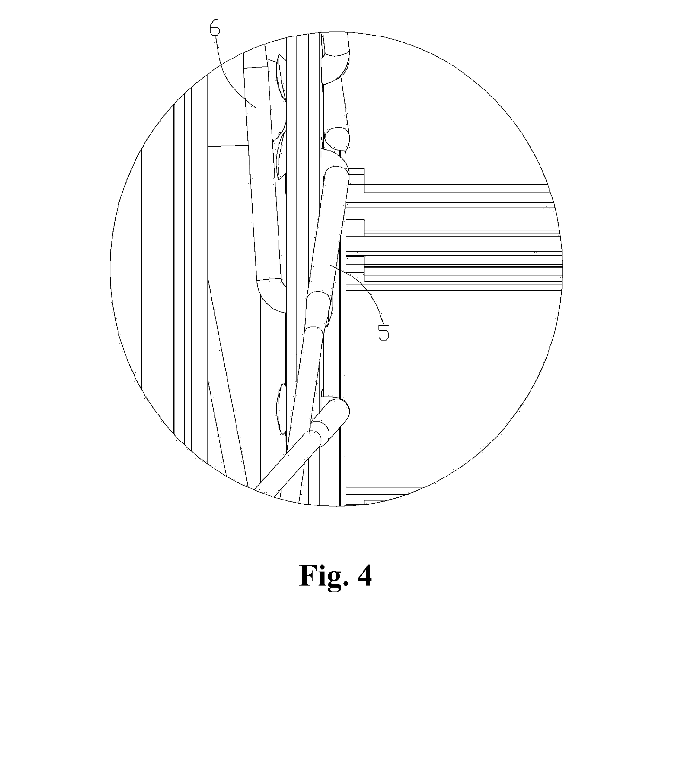

Typical bicycle wheels include a front wheel and a rear wheel. The front wheel comprises of a rim 1, spoke wires and a hub 2, as shown in Fig. 1-4, the first end of a spoke wire is connected to the hub 2, the second end is connected to rim 1. In the present wheel structure, the hub 2 is provided with an annular protruding ear 3 on each side, the protruding ear 3 is provided with perforations for allowing the spoke wires to pass through. However, when the second end of spoke wire is connected to rim 1, the second of end the spoke wire is lean toward the plane of hub 2, therefore, the spoke wire is slanted. In order to distinguish between spoke wires bored in different direction, there are given the names outer spoke wire 5 and inner spoke wire 6, outer spoke wire 5 is the wire that passes from the inner side of protruding ear to the outer side of the protruding, wherein the neck portion of the wire exposes on the outer side of the protruding ear 3; in contrary, inner spoke wire 6 is the wire that passes from the outer sider of the protruding ear to the inner side of the protruding ear, wherein the neck portion of the wire exposes on the inner side of the protruding ear 3. Because the outside edge of protruding ear 3 is not milled , the neck portion of outer spoke wire 5 that exposes on the outer side of hub 2 presses on hub 2, resulting the bending of outer spoke wire 5, and eventually breaking of outer spoke wire 5 will happen. In the current art, there existing milling openings on protruding ear 3 having, however, the purpose of milling openings is to reduce the weight of hub 2, the woven structure of outer spoke wire 5 remains the same as the current art, that is, the neck portion of outer spoke wire 5 still presses on hub 2, resulting bending of outer spoke wire 5, and eventually outer spoke wire 5 will break, hence, improvement addressing this problem is needed.

### SUMMARY OF THE INVENTION

The objective of present invention is to provide a bicycle wheel that prevents the bending of spoke wires. Furthermore, the present invention of bicycle hub has a simple structure that reduces the weight of hub, solves the bending problem of spoke wires, and prolongs the life of outer spoke wires.

To achieve the above objectives, the present invention of bicycle wheel adopts the following structural characteristics:
a bicycle wheel comprises of a rim, a hub and spoke wires, wherein, the two side of the wheel hub is provided with an annular protruding ear. The ear is provided with perforations for allowing spoke wires to pass through. The first end of the spoke wires connect to the perforations, and the second end of the spoke wires connect to the bicycle rim. The edge of ear is provided with openings. The spoke wires comprises of inner spoke wires and outer spoke wires. The openings are located by the perforations. The intersection point between the outer spoke wire and the protruding ear is located in the opening.

As a preferred embodiment, the neck portion of the outer spoke wire passes through the opening and the neck portion of the outer spoke wire lay over the outer edge of the opening.

As a preferred embodiment, the inner spoke wire crosses with the outer spoke wire. The cross point between the inner spoke wire and the outer spoke wire located in the opening or above the opening. The inner spoke wire and outer spoke wire lay over the edge of the opening.

As a preferred embodiment, the location of the perforations are lower than the opening, and more precisely, the perforations locate on the bottom edge of the opening or near the bottom edge of the opening.

As a preferred embodiment, the opening is provided between two adjacent perforations, respectively, the inner spoke wire and outer spoke wire is connected to the two adjacent perforations. The outer spoke wires are slanted at an axial and a radial tilt angle, the bottom portion of outer spoke wire passes through the opening without touching the protruding ear to keep in a straight line form.

As a preferred embodiment, the outer spoke wire comprises a portion of outer spoke wire that passes from inner side of the protruding ear to the outer side of the protruding. This portion of outer spoke wire exposes on the outer side of the protruding ear. And the inner spoke wire comprises a portion of inner spoke wire that passes from outer side of the protruding to the inner side of the protruding ear. This portion of inner spoke wire exposes on the inner side of the protruding ear.

As a preferred embodiment, the outer end of the opening along the side of the hub penetrates through in the radial direction of the protruding ear.

As a preferred embodiment, the opening penetrates through the protruding ear along the axial side of said hub.

As a preferred embodiment, the opening is provided on the outer side of said protruding ear, said opening does not penetrate said protruding ear in the radial direction.

As a preferred embodiment, the two sides of the hub are provided with weight reduction grooves. The weight grooves are uniformly distributed around the concentric ring region of the hub.

With the above described preferred embodiment the advantage of present invention over the prior arts are: by providing openings on the protruding ear for allowing outer spoke wires to pass through , not only reducing the weight of protruding ear, but also allowing the hub ear from interfering with outer spoke wires, that further prevents the outer spoke wire from pressing against the hub ear. As such, eliminates the problem of bending outer spoke wire, and prolong the life of outer spoke wire.

### BREIF DESCRIPTION OF DRAWINGS

Fig. 1 is a structural view of common bicycle wheel;
Fig. 2 is the expanded view of Portion A in Fig. 1;
Fig. 3 is a left side view of common bicycle wheel;
Fig. 4 is the expanded view of Portion B in Fig. 3;
Fig. 5 is the structural view of current invention bicycle wheel;
Fig. 6 is a left side view of current invention bicycle wheel;
Fig. 7 is the expanded view of Portion C in Fig. 5; and
Fig. 8 is the expanded view of Portion D in Fig. 7.

### DETAILED DESCRIPTION OF PREFERRED EMBODIMENT

The structural characteristics of the present invention bicycle wheel that prevents the bending of spoke wires can be more understood with the follow detailed description of the preferred embodiment.

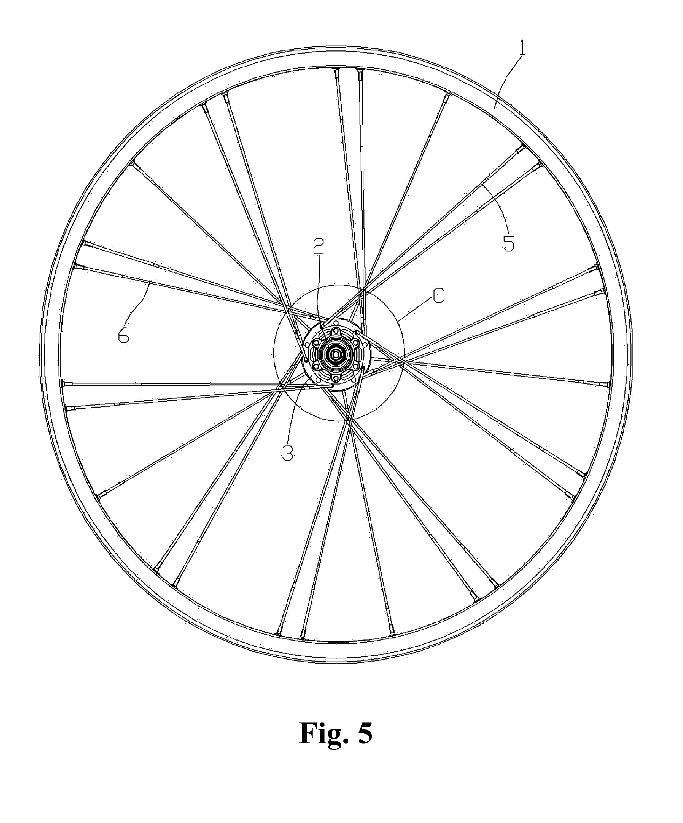

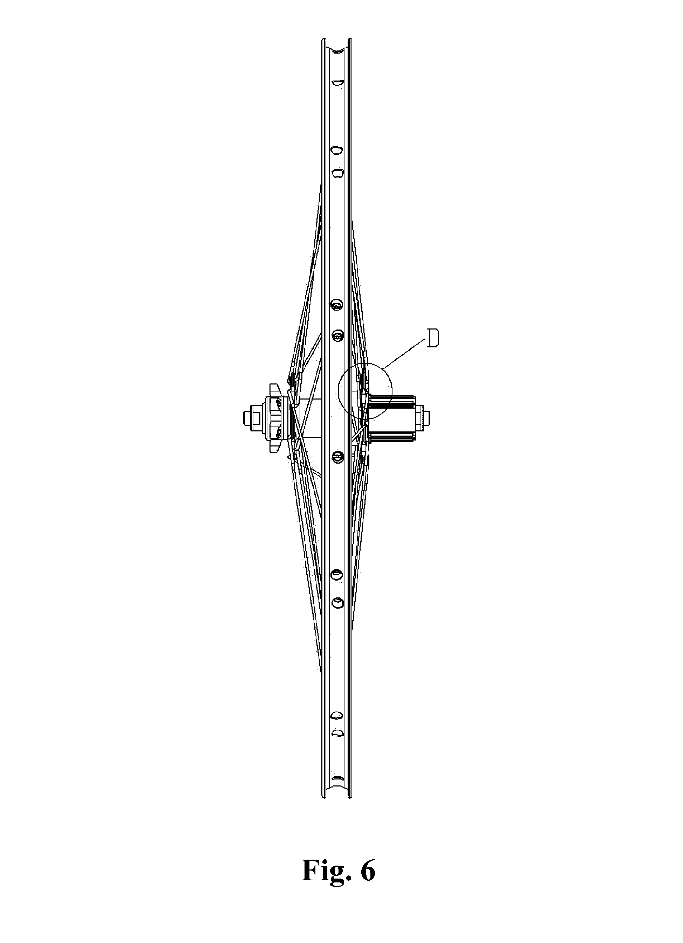

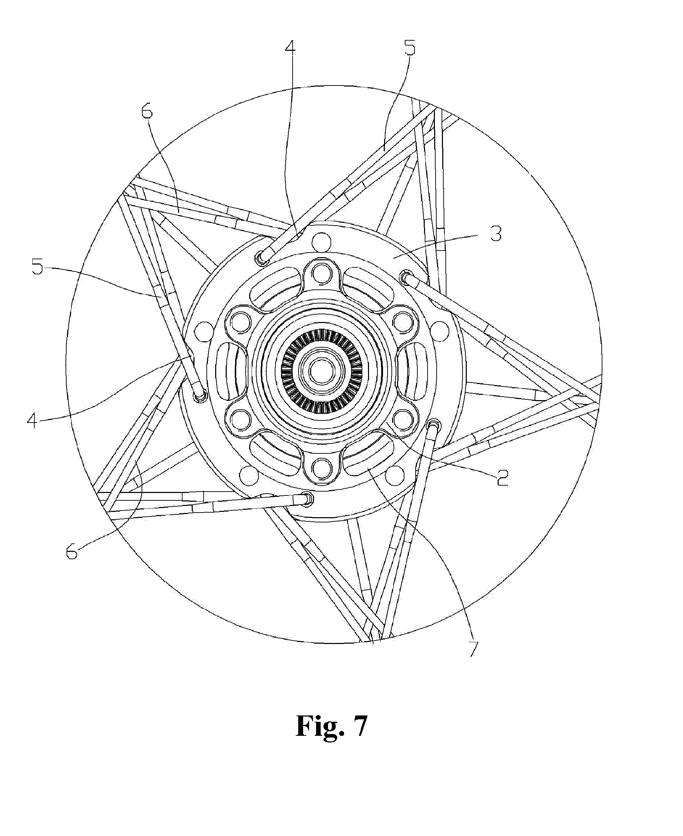

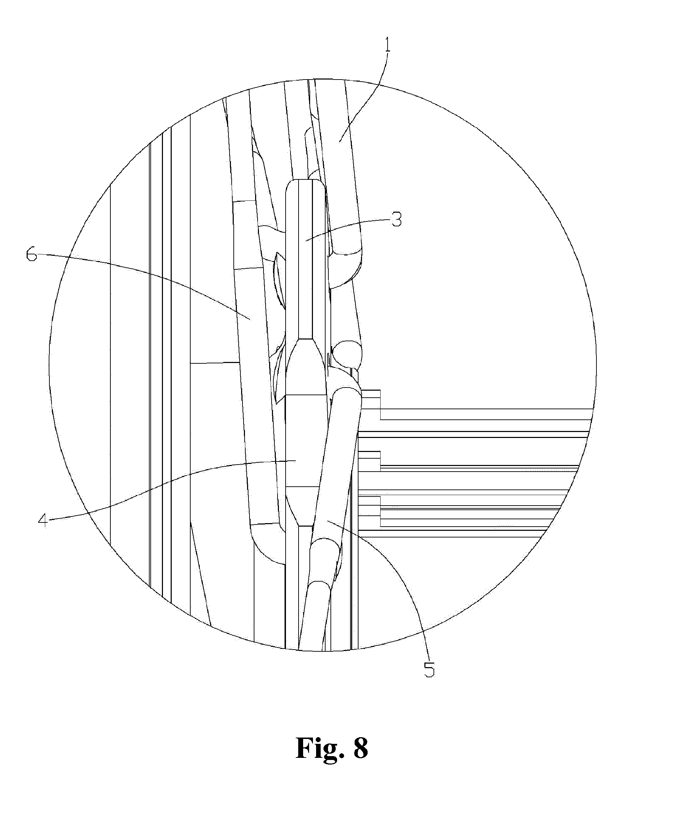

As a preferred embodiment, as shown in Fig. 5-Fig. 8: present invention of bicycle wheel that prevents the bending of spoke wires comprises a rim 1, a hub 2 and a protruding ear 3 provided on both side of the hub 2. Weight reduction grooves 7 are provided on the surface of the two sides of hub 2. Weight reduction grooves 7 are uniformly place around the concentric rim of hub 2. Both sides of Hub 2 is provided with an annular protruding ear 3. The protruding ear 3 is provided with perforations for allowing the spoke wire to pass through. The first end of the spoke wire is connected to the perforation and the second end of the spoke wire is connected to the rim 1. The outer edge of protruding ear 3 is provided with opening 4. The spoke wires comprise of inner spoke wire 6 and outer spoke wire 5. Outer spoke wire 5 comprises a neck portion that passes from the inner side of protruding ear 3 to the outer side of protruding ear 3, said neck portion exposes on the outer side of the protruding ear 3. Inner spoke wire 6 comprises a neck portion that passes from the outer side of protruding ear 3 to the inner side of protruding ear 3, said neck portion exposes on the inner side of the protruding ear 3. Opening 4 is located by the perforation for connecting with outer spoke wire 5. The intersection between the outer spoke wire 5 and the protruding ear 3 is located in the opening 4. More specifically, the opening 4 is located in between two adjacent perforations. The two adjacent perforations having the opening 4 in between connect to an inner spoke wire 6 and an outer spoke wire 5 respectively. The outer spoke wire 5 is slanted in angle in relation to an axial and a radial direction. The neck portion of outer spoke wire 5 passes through opening 4 and keeps in a straight line without touching the protruding ear 3. Opening 4 provides weight reduction of hub 2, at the same time, avoiding protruding ear 3 interfering with outer spoke wire 5 that might result in bending outer spoke wire 5. In this way, the life of outer spoke wire 5 is prolonged.

The neck portion of outer spoke wire 5 passes through opening 4 and it lays over the outer edge of opening 4. Inner spoke wire 6 and outer spoke wire 5 crosses with each other, the crossing point is located in the opening 4 or above opening 4; inner spoke wire 6 and outer spoke wire 5 lay over the edge of opening 4. The crossing point between inner spoke wire 6 and outer spoke wire 5 also lay over the edge of opening 4, this way, prevents the edge of opening 4 from cutting or hooking user's hand and other foreign bodies.

The outer rim of opening 4 penetrate through the outer rim of protruding ear 3 in the radial direction of hub 2. The opening 4 penetrate through protruding ear 3 in the axial direction of hub 2. The position of perforation is lower than or close to the lower edge of the opening 4. Opening 4 is located in between two adjacent perforations and is shaped in fan shape.

In another preferred embodiment, opening 4 is provided on the outer surface of protruding ear 3. In this embodiment opening 4 does not penetrate through protruding ear 3 in the radial direction.

## Claims

1. An improved bicycle wheel hub that prevents the bending of spoke wires, comprises a rim (1), a hub (2) having an annular protruding ear (3) on each side, said protruding ear (3) is provided with perforations for allowing spoke wires to pass through; wherein the first end of the spoke wire is connected to the said perforation and the second is connected to the bicycle rim; said protruding ear (3) is provided with opening (4) on the edge of the ear (3), spoke wires comprise of inner spoke wires (6) and outer spoke wires (5), it is characterized that: the openings (4) are located by the perforations and the intersection between the outer spoke wire (5) and the protruding ear (3) is located in the opening.

2. The improved bicycle wheel hub as claimed in Claim 1, it is characterized that:
the lower portion of said outer spoke wire (5) overpasses said opening (4) and
passes through said perforation; said lower portion of the outer spoke wire overlaying the outer side of said opening (4).

3. The improved bicycle wheel hub as claimed in Claim 1 or 2, it is characterized that: said inner spoke wire (6) crosses with said outer spoke wire (5), the cross point between said inner spoke wire (6) and outer spoke wire (5) located in said opening (4) or above the said opening (4); said inner spoke wire (6) and outer spoke wire (5) overlaying the edge of said opening (4).

4. The improved bicycle wheel hub as claimed in one of Claims 1 to 3, it is characterized that: the location of said perforation is lower than said opening (4) on the protruding ear (3); the location of said perforation is located at or near by the inner edge of said opening (4).

5. The improved bicycle wheel hub as claimed in one of Claims 1 to 4, it is characterized that: said opening (4) is provided between two adjacent perforations, respectively, said inner spoke wire (6) and outer spoke wire (5) is connected to said two adjacent perforations, said outer spoke wires (5) are slanted at an axial and a radial tilt angle, the bottom portion of said outer spoke wire passes through said opening (4) without touching said protruding ear (3) to keep in a straight line form.

6. The improved bicycle wheel hub as claimed in one of Claims 1 to 5, it is characterized that: said outer spoke wire (5) comprises a portion of outer spoke wire that passes from inner side of said protruding ear (3) to the outer side of said protruding (3); said portion of outer spoke wire (5) exposes on the outer side of said protruding ear (3), and said inner spoke wire (6) comprises a portion of inner spoke wire that passes from outer side of said protruding ear (3) to the inner side of said protruding ear (3); said portion of inner spoke wire exposes on the inner side of said protruding ear (3).

7. The improved bicycle wheel hub as claimed in one of Claims 1 to 6, it is characterized that: the outer end of said opening (4) along the side of said hub (2) penetrates through in the radial direction of said protruding ear (3).

8. The improved bicycle wheel hub as claimed in one of Claims 1 to 7, it is characterized that: said opening (4) penetrates through said protruding ear (3) along the axial side of said hub (2).

9. The improved bicycle wheel hub as claimed in one of Claims 1 to 8, it is characterized that: said opening (4) is provided on the outer side of said protruding ear (3), said opening (4) does not penetrate said protruding ear (3) in the radial direction.

10. The improved bicycle wheel hub as claimed in one of Claims 1 to 9, it is characterized that: the two sides of said hub (2) are provided with weight reduction grooves, said weight grooves are uniformly distributed around the concentric ring region of said the hub (2).
